# FASCICULE DE BREVET EUROPEEN

(11) **EP 2 033 867 B1**
(45) Date de publication et mention de la délivrance du brevet: **31.10.2012**
(21) Numéro de dépôt: 08300266.7
(22) Date de dépôt: 09.09.2008
(51) Int. Cl.: B60W 40/06, B60W 30/18, B60T 7/12

(54) **Système automatique de maintien en pente pour véhicule**
Automatisches System zum Halten eines Fahrzeugs am Hang
Automatic hill holder for a vehicle

(30) Priorité: 10.09.2007 FR 0757447
(43) Date de publication de la demande: 11.03.2009
(73) Titulaire: PEUGEOT CITROËN AUTOMOBILES S.A., 78140 Vélizy Villacoublay (FR); ROBERT BOSCH GMBH, 70442 Stuttgart (DE)
(72) Inventeur: Blaise, Philippe, 25490 Dampierre les Bois (FR); Charpin, Emmanuel, 25460 Etupes (FR); Monfront, Gaël, 93220 Gagny (FR)
(74) Mandataire: Ménès, Catherine

(56) Documents cités:
- US-A1- 2005 096 183
- US-A1- 2007 085 417
- US-B1- 6 422 333

## Description

La présente invention concerne un système automatique de maintien en pente pour un véhicule, en particulier pour un véhicule automobile.

Des véhicules automobiles sont équipés d'un système automatique de maintien en pente, qui vient assister le conducteur lors de manoeuvres sur une voie en pente.

Qu'il s'agisse d'un véhicule automobile de type 4 X 2 ou de type 4 X 4, un tel système de maintien en pente à pour fonction d'améliorer la prestation d'aide aux manoeuvres en pente du conducteur, qu'il soit ou non novice, quelque soit le type d'adhérence du véhicule sur la voie : haute adhérence, moyenne adhérence, basse adhérence, en particulier en cas de neige et de glace, et adhérence dans des situations particulières dites « off road », comme la circulation hors piste sur sable, boue, terrains de graviers et de cailloux, etc.

Le principe d'un tel système est de « maintenir » le véhicule pendant un certain temps lorsque le conducteur n'accélère pas et le sens de marche est inverse au sens de la pente.

Cette amélioration de la prestation d'aide aux manoeuvres en pente se fait dans les limites de la physique, en particulier de l'adhérence disponible, du dénivelé du terrain, bien que le système d'anti-blocage des roues surveille ce point.

Un système de maintien en pente de véhicule comprend au moins un algorithme de détection de pente.

Cet algorithme peut être hébergé dans le calculateur ESP, ou bien dans un autre calculateur en communication avec le calculateur ESP, le calculateur ESP étant interconnecté et dialoguant avec les autres calculateurs du véhicule, en particulier le calculateur moteur. L'acronyme ESP (pour « Electronic Stability Program ») désigne, de manière classique, un équipement de sécurité active, largement utilisé, qui est destiné à améliorer le contrôle de trajectoire d'un véhicule automobile. L'ESP corrige la trajectoire en agissant sur le système de freinage et d'injection de carburant au moteur.

Des systèmes d'aide aux manoeuvres existent déjà, qui intègrent une fonction d'aide au maintien sur la pente, laquelle est largement fonction de la qualité des moyens de détection de la pente.

A titre d'exemple, on connaît déjà, selon le document FR 2 828 450, un dispositif d'assistance aux manoeuvres en côte d'un véhicule, qui comprend un groupe motopropulseur, connecté aux roues motrices par l'intermédiaire d'un embrayage et d'une boîte de vitesses dont les rapports peuvent être sélectionnés lors d'un découplage de la puissance motrice par débrayage, et un système de freinage dont au moins le desserrage peut être contrôlé. Le dispositif comporte un moyen pour estimer la pente dans laquelle le véhicule est engagé, un moyen pour interpréter les commandes du conducteur et/ou d'un organe central de conduite, un moyen pour déterminer les caractéristiques instantanées de l'embrayage, un moyen connecté aux trois moyens précédents pour effectuer une commande de desserrage du système de freinage, de sorte que le véhicule soit maintenu dans la pente lors de la manoeuvre. Dans ce dispositif, le moyen pour effectuer une commande de desserrage des freins produit un signal de sortie actif quand le couple transmis à la roue est supérieur à une valeur prédéterminée de couple de maintien dans la pente.

Le document US 5 484 044 décrit un dispositif de commande automatique d'un système de freinage de véhicule en côte, qui a pour fonction de maintenir le véhicule en arrêt en côte même si les freins sont lâchés. Le dispositif relâche automatiquement les freins lorsque le couple moteur produit par le moteur contre les organes de freinage de la roue est égal - ou supérieur - au couple opposé de freinage qui résulte de la pente de la côte. Une soupape de commande électromécanique est montée sur le système de freinage du véhicule, pour autoriser ou, au contraire, bloquer la détente de la pression du fluide de freinage appliquée aux organes de freinage de la roue dès qu'il y a activation de ladite soupape par une unité de commande. Cette unité de commande reçoit des informations relatives au couple moteur appliqué d'un capteur de charge monté sur les organes de freinage d'au moins une roue du véhicule.

On connaît aussi, selon le document JP 2004-322855, un dispositif de commande de direction destiné à empêcher tout déplacement d'un véhicule en stationnement qui pourrait résulter d'un défaut de prise du système de freinage lorsqu'il est en stationnement dans une pente. Le dispositif de commande de direction comprend un moyen de détection de l'angle de braquage pour détecter une position angulaire de braquage d'un mécanisme de direction installé sur le véhicule, un moyen de détection de l'état de stationnement pour détecter que le véhicule est en position de stationnement, un moyen de détection de l'inclinaison de la surface de la voie pour détecter une inclinaison de la surface de la voie là où le véhicule est situé, un moyen d'entraînement pour commander l'entraînement du mécanisme de direction, et un moyen de commande pour commander le moyen d'entraînement. Ce moyen de commande exerce une commande du moyen d'entraînement, de telle manière que, lorsque le moyen de détection de l'état de stationnement détecte l'état de stationnement et que le moyen de détection de l'inclinaison de la surface de la voie détecte une inclinaison de la surface de la voie qui n'est pas inférieure à une valeur d'angle d'inclinaison prédéterminée, alors le mécanisme de direction est automatiquement orienté pour être braqué à un angle de direction prédéterminé où le véhicule peut être déplacé vers l'avant ou vers l'arrière contre un bord de la voie.

On connaît enfin par le document US 2007/0085417 un dispositif pour maintenir une force de freinage d'un véhicule à l'arrêt sur une surface d'une route en pente et qui comprend notamment une unité électronique de contrôle reliée à un capteur d'angle de braquage du volant de direction et un moyen de détection de l'angle d'inclinaison de la surface de la route sur laquelle le véhicule a été arrêté. De la sorte, l'unité électronique de contrôle établit une pression de freinage minimum à chaque roue de véhicule suivant l'angle d'inclinaison de la surface de la route.

Tous ces dispositifs d'aide aux manoeuvres en pente présentent des inconvénients.

Ainsi, par exemple, dans le cas d'un véhicule perpendiculaire à la pente avec les roues en position de braquage dans le sens de la pente (montante), il n'y a pas de détection de la pente, et encore moins d'estimation de cette dernière, et le véhicule, dans ces conditions, peut bouger et se trouver, ainsi, dans une situation difficile.

De même, dans le cas d'un véhicule en devers avec, de la même façon, les roues en position de braquage dans le sens de la pente (montante), la détection de la pente est aléatoire et fonction du pourcentage de la pente, et cette mauvaise estimation présente des conséquences défavorables sur la tenue du véhicule sur la pente.

Le but de la présente invention est de perfectionner les systèmes automatiques de maintien en pente pour véhicules, en particulier pour véhicules automobiles, de manière à surmonter les limites et difficultés mentionnées ci-dessus des systèmes connus de l'art antérieur.

Un autre but de la présente invention est de fournir un système automatique de maintien en pente de véhicule, qui soit de conception simple, de réalisation aisée, de fonctionnement simple, qui soit fiable, robuste et très économique.

Pour parvenir à ces buts, la présente invention conçoit un système automatique de maintien en pente pour véhicule, en particulier pour véhicule automobile, et qui comprend les caractéristiques techniques telles qu'énoncées dans la revendication 1.

Le moyen de calcul peut être le calculateur ESP du véhicule.

En variante, le moyen de calcul peut être un calculateur du véhicule en communication avec le calculateur ESP du véhicule.

Le système de freinage sur lequel agissent les moyens d'action peut être le système de freinage hydraulique principal, ou bien le système de freinage découplé.

La présente invention propose un nouveau véhicule automobile, qui est équipé d'un système automatique de tenue en pente conforme à celui décrit ci-dessus dans ses grandes lignes.

Ce nouveau véhicule peut être un véhicule de type 4 X 2, équipé d'un système ESP, ou encore un véhicule de type 4 X 4, équipé d'un système ESP.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 est un tableau illustrant cinq situations différentes A, B, C, D et E selon la position du véhicule sur une voie en pente et selon, également, la position des roues par rapport à l'axe longitudinal du véhicule,
- la figure 2 illustre, de manière schématique, le principe d'un système de maintien en pente connu de l'art antérieur, dans la situation d'un véhicule en devers avec braquage des roues,
- la figure 3 illustre, de manière schématique, le principe d'un système de maintien en pente selon la présente invention, dans la situation d'un véhicule en devers avec braquage des roues,
- la figure 4 est un schéma bloc fonctionnel d'organes du véhicule, qui illustre le principe du système de maintien en pente de la présente invention.

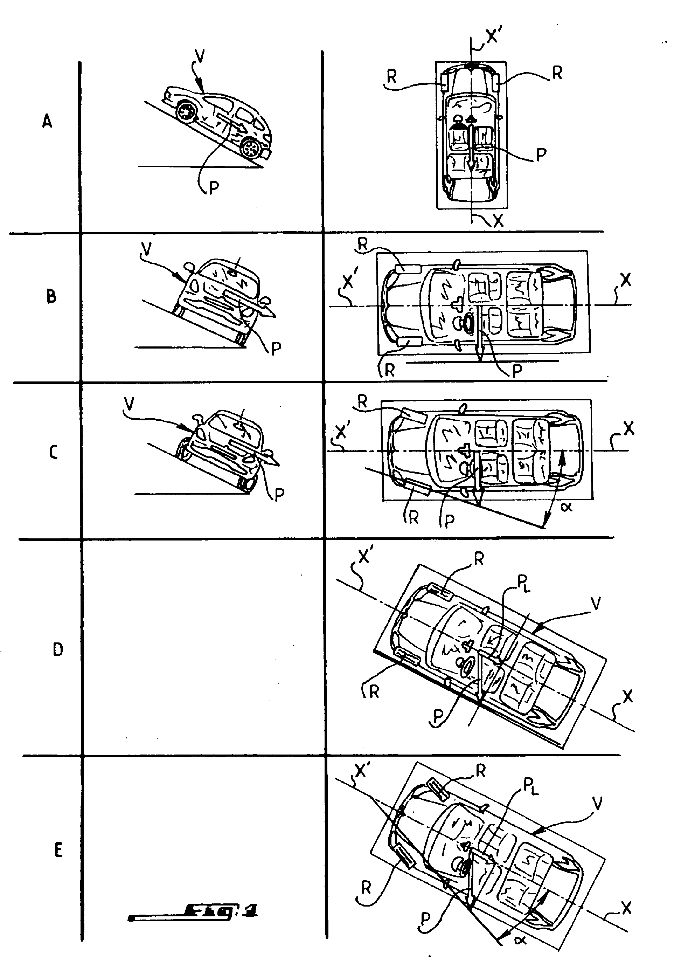

En référence au dessin de la figure 1, on a représenté cinq situations différentes par la position du véhicule et de ses roues, et pour chacune de ces cinq situations, désignées A, B, C, D et E, on expose brièvement ci-après les limites et les défauts des systèmes de maintien en pente pour véhicules automobiles, connus de l'art antérieur.

Dans la situation A, le véhicule V, d'axe longitudinal XX', est parallèle à la pente P et les roues avant R sont droites et parallèles à l'axe longitudinal XX' du véhicule ; l'axe longitudinal XX' du véhicule et la pente s'étendent dans la même direction. Les systèmes de maintien en pente de l'art antérieur offrent, dans cette situation, une bonne détection de la pente et une bonne estimation de la valeur de la pente du véhicule.

Dans la situation B, la direction de l'axe longitudinal XX' du véhicule V est perpendiculaire à la direction de la pente P et les roues avant R sont droites et parallèles à l'axe longitudinal XX' du véhicule V. Dans les systèmes de l'art antérieur et dans ce cas précis, il n'y a pas de détection et d'estimation de la pente P ; ce qui est normal, parce que, dans ces conditions de la situation B, le véhicule V n'est pas sensé bouger.

Dans la situation C, la direction de l'axe longitudinal XX' du véhicule V est perpendiculaire à la direction de la pente P et les roues avant R sont braquées d'un angle α dans le sens de la pente P. Les systèmes de maintien en pente, connus, ne détectent pas la pente P, et ne calculent pas a fortiori la valeur de cette pente. Toutefois, dans cette condition désignée C, le véhicule V peut bouger et se trouve, par conséquent, dans une situation très critique.

Dans la situation D, le véhicule V est en devers et les roues avant R sont droites et parallèles à l'axe longitudinal XX' du véhicule V. Les systèmes de maintien en pente, connus de l'art antérieur, détectent la pente en fonction de la position du véhicule.

Dans la situation E, le véhicule V est également en devers et les roues avant R sont braquées d'un angle α dans le sens de la pente P. Comme déjà mentionné précédemment, dans ce cas, les systèmes de maintien en pente, connus de l'art antérieur, effectuent une détection aléatoire de la pente fonction du pourcentage de la pente, par conséquent une mauvaise estimation de la pente.

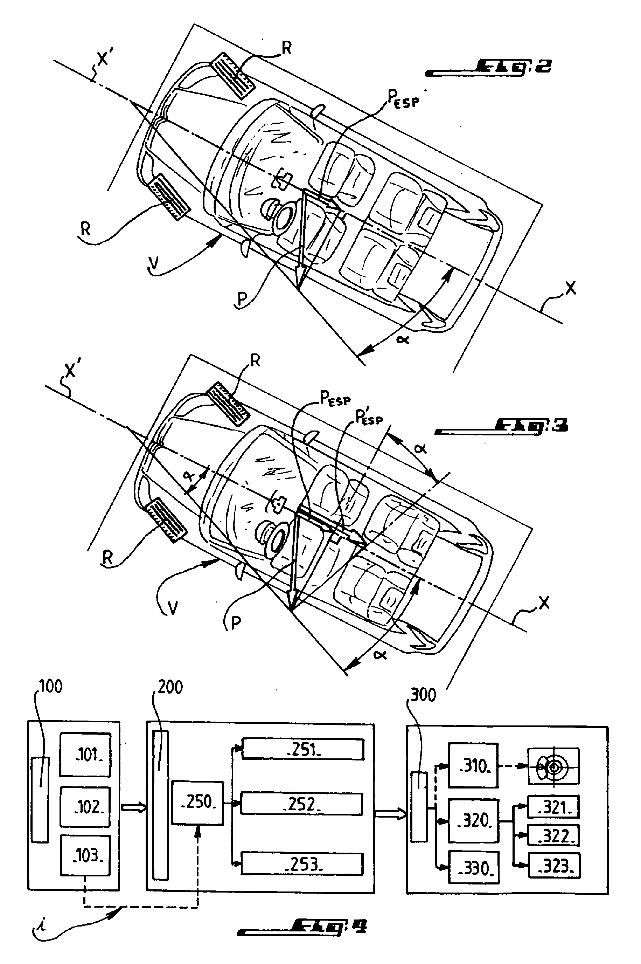

Comme illustré également sur le dessin de la figure 2, dans le cas d'un véhicule en devers, tel que décrit ci-dessus dans la situation E, qui est équipé d'un système de maintien de pente selon l'art antérieur, la pente P est la pente mesurée par le capteur et P_{ESP} est la pente utilisée par le calculateur ESP (ou un calculateur embarqué lié au calculateur ESP) ramenée à l'axe longitudinal XX' du véhicule V. L'angle du volant α, qui est l'angle de braquage des roues par rapport à l'axe longitudinal XX' du véhicule V, n'intervient pas dans l'estimation de la pente P_{ESP}.

Le principe du système automatique de maintien de la présente invention consiste, contrairement aux systèmes connus de l'art antérieur, à prendre en compte l'information relative à l'angle volant α dans le calcul de la pente et son estimation. Ainsi, comme illustré sur le dessin de la figure 3, la pente P'_{ESP} utilisée par l'ESP du système de l'invention est, compte tenu de la prise en compte de l'angle volant α, différente de celle P_{ESP} utilisée dans les systèmes de l'art antérieur.

Le tableau I ci-dessous présente, pour chacune des situations A à E, la réponse des systèmes de l'art antérieur et la réponse du perfectionnement apporté par la présente invention.

**Tableau I**

| | Situations | Systèmes connus de l'art antérieur | Système nouveau de la présente invention |
|---|---|---|---|
| **A** | Véhicule // à la pente, avec les roues droites // à l'axe du véhicule. | Bonne détection de la pente et bonne estimation de la pente | Bonne détection de la pente et bonne estimation de la pente |
| **B** | Véhicule ┴ à la pente, avec les roues droites // à l'axe du véhicule. | Pas de détection et d'estimation de la pente ; ce qui est normal, parce que le véhicule ne bouge pas. | Pas de détection et d'estimation de la pente ; ce qui est normal, parce que le véhicule ne bouge pas. |
| **C** | Véhicule ┴ à la pente, avec les roues braquées dans le sens de la pente. | Pas de détection de la pente, ni d'estimation de la pente. Le véhicule peut bouger, par conséquent, la situation est critique. | Prise en compte de la pente vue par l'axe directeur. le véhicule est bien tenu dans cette situation. |
| **D** | Véhicule en devers, avec les roues // à l'axe du véhicule. | Détection de la pente en fonction de la position du véhicule dans la pente. | Détection de la pente en fonction de la position du véhicule dans la pente. |
| | | | |
| **E** | Véhicule en devers, avec les toues braquées dans le sens de la pente. | Détection de la pente aléatoire suivant le pourcentage de la pente. Mauvaise estimation de la pente. | Bonne détection de la pente suivant le pourcentage de la pente. Bonne estimation de la pente vue par l'axe directeur, et donc meilleure tenue en pente du véhicule. |

La prise en compte de l'angle volant α vient corriger le calcul de la pente et son estimation pour la prise en compte par l'ESP.

Dans les deux situations désignées C et E, la prise en compte de l'angle volant dans le calcul de la pente permet de remédier aux défauts des systèmes connus de l'art antérieur tels qu'exposés précédemment.

Le système automatique de maintien en pente de la présente invention consiste, principalement, en une évolution de (ou des) algorithme(s) de détection de pente, que ce soit avec le freinage principal ou avec le freinage découplé.

Ce (ou ces) algorithme(s) peuvent être hébergés dans le calculateur ESP du véhicule, ou dans tout autre calculateur qui est en communication avec le calculateur ESP.

La figure 4 représente le schéma bloc fonctionnel des organes du véhicule dans lesquels vient s'insérer le système de maintien en pente de la présente invention.

La référence numérique 100 désigne des organes - dans le cas présent, un ensemble de capteurs 101, 102 et 103 - qui élaborent, à partir de grandeurs physiques telles que respectivement l'accélération (capteur 101), la vitesse (capteur 102) ou l'angle du volant (capteur 103), une autre grandeur de nature électrique à fin de traitement numérique dans un calculateur de type calculateur ESP, référencé 200 de manière générale.

Le calculateur ESP comprend une unité de calcul de la pente 250 dont la valeur de sortie, c'est-à-dire l'estimation chiffrée (en %) de la pente, est fournie à différents systèmes embarqués, tels que le système de régulation anti-blocage des roues (ABS) référencé 251, le système de régulation anti-patinage des roues (ASR) référencé 252 et le système régulateur du taux de lacet 253.

L'information donnée par le capteur d'angle du volant 103 est, selon le principe de la présente invention, une donnée d'entrée de l'unité de calcul de la pente 250, comme l'illustre très schématiquement le circuit d'information en traits interrompus courts référencé « i ».

Les informations traitées sont adressées à des systèmes, connus en eux-mêmes et par conséquent non décrits dans le présent texte, qui dirigent des mécanismes - ou actionneurs - qui ont pour but d'agir sur le véhicule en vue de modifier son comportement ou son état. Ces actionneurs sont, en particulier :
- le calculateur de gestion moteur 320 qui gère, en particulier, l'angle d'allumage 321, l'injection de carburant 322 et le papillon des gaz 323,
- le système de freinage découplé 330, et de plus, selon la présente invention,
- le groupe hydraulique 310 du système de freinage.

La présente invention présente de nombreux avantages, parmi lesquels les avantages suivants :
- elle permet d'obtenir une meilleure détection et une meilleure estimation de la pente, ce qui est particulièrement important dans les situations décrites précédemment, notamment celles dans lesquelles les roues du véhicule sur une voie en pente sont braquées dans le sens de la pente,
- elle est économique, parce que sa réalisation nécessite des travaux qui n'ont pas d'impact sur le nombre, la structure et le montage des pièces mécaniques ou électroniques.

Bien entendu, la présente invention n'est pas limitée au mode de réalisation décrit et représenté ci-dessus à titre d'exemple ; d'autres modes de réalisation peuvent être conçus par l'homme de métier sans sortir du cadre et de la portée de la présente invention comme définis par les revendications.

## Revendications

1. Système automatique de maintien en pente pour véhicule, en particulier pour véhicule automobile, comprenant un moyen de calcul pour le calcul de la pente de la voie sur laquelle se trouve le véhicule et des moyens d'action pour agir sur le système de freinage et la gestion du moteur en fonction de la valeur de ladite pente, **caractérisé en ce que** le moyen de calcul (250) est relié à un capteur (103) de mesure d'angle de braquage (α) du volant de direction du véhicule pour prendre en compte, dans son algorithme de calcul, la valeur de l'angle de braquage du volant mesurée par le capteur (103), corriger le calcul de la pente de manière à avoir une bonne détection et une bonne optimisation de la pente dans les situations de braquage des roues dans le sens de la pente, et fournir la valeur estimée de la pente aux moyens d'action pour agir sur le système de freinage et la gestion du moteur en fonction de la valeur estimée de la pente à partir de l'angle de braquage du volant de direction.

2. Système selon la revendication 1, **caractérisé en ce que** le moyen de calcul (200) est le calculateur ESP du véhicule.

3. Système selon la revendication 1, **caractérisé en ce que** le moyen de calcul est un calculateur du véhicule en communication avec le calculateur ESP du véhicule.

4. Système selon la revendication 1, **caractérisé en ce que** le système de freinage sur lequel agissent lesdits moyens d'action est le système de freinage hydraulique principal (310).

5. Système selon la revendication 1, **caractérisé en ce que** le système de freinage sur lequel agissent lesdits moyens d'action est le système de freinage découplé (330).

6. Véhicule automobile, **caractérisé en ce qu'**il est équipé d'un système automatique de maintien en pente conforme à l'une quelconque des revendications 1 à 5.

7. Véhicule selon la revendication 6, **caractérisé en ce qu'**il s'agit d'un véhicule de type 4 X 2, équipé d'un système ESP.

8. Véhicule selon la revendication 6, **caractérisé en ce qu'**il s'agit d'un véhicule de type 4 X 4, équipé d'un système ESP.

## Claims

1. Automatic system for maintenance on a slope for a vehicle, in particular for a motor car, comprising a computing means for calculating the slope of the path on which the vehicle is situated and action means for acting on the braking system and managing the engine according to said slope, **characterised in that** the computing means (250) is connecting to a sensor (103) for measuring the steering angle (α) of the steering wheel of the vehicle in order to take into account, in its computing algorithm, the steering angle of the steering wheel measured by the sensor (103), correcting the calculation of the slope so as to have good detection and good optimisation of the slope in situations of steering the wheels in the direction of the slope, and supplying the estimated value of the slope to the action means in order to act on the braking system and the engine management according to the estimated value of the slope from the steering angle of the steering wheel.

2. System according to claim 1, **characterised in that** the computing means (200) is the ESP computer of the vehicle.

3. System according to claim 1, **characterised in that** the computing means is a computer of the vehicle in communication with the ESP computer of the vehicle.

4. System according to claim 1, **characterised in that** the braking system on which said action means act is the main hydraulic braking system (310).

5. System according to claim 1, **characterised in that** the braking system on which said action means act is the decoupled braking system (330).

6. Motor car, **characterised in that** it is equipped with an automatic system for maintenance on a slope in accordance with any one of claims 1 to 5.

7. Vehicle according to claim 6, **characterised in that** it is a vehicle of the 4x2 type, equipped with an ESP system.

8. Vehicle according to claim 6, **characterised in that** it is a vehicle of the 4x4 type, equipped with an ESP system.

## Patentansprüche

1. Automatisches System zum Halten eines Fahrzeugs, im Speziellen eines Kraftfahrzeugs, am Hang, umfassend ein Rechengerät zum Berechnen des Gefälles des Weges, auf dem sich das Fahrzeug befindet, und Wirkglieder, um je nach dem Wert des besagten Hanggefälles auf das Bremssystem und das Motormanagement einzuwirken, **dadurch gekennzeichnet, dass** das Rechengerät (250) mit einem Sensor (103) zum Messen des Einschlagwinkels (α) des Lenkrades des Fahrzeugs verbunden ist, um in seinem Rechenalgorithmus den Wert des Einschlagwinkels des Lenkrades des Fahrzeugs zu berücksichtigen, der vom Sensor (103) erhoben worden ist, um die Berechnung des Hanggefälles zu korrigieren, sodass man eine korrekte Erfassung und Optimierung des Gefälles in den Situationen des Radeinschlags in Richtung des Hanges erhält, und um den Schätzwert für das Hanggefälle an die Wirkglieder zu liefern, um je nach Schätzwert für das Hanggefälle ausgehend vom Einschlagwinkel des Lenkrades auf das Bremssystem und das Motormanagement einzuwirken.

2. System nach Anspruch 1, **dadurch gekennzeichnet, dass** das Rechengerät (200) der ESP Rechner des Fahrzeugs ist.

3. System nach Anspruch 1, **dadurch gekennzeichnet, dass** das Rechengerät ein Rechner des Fahrzeugs ist, der mit dem ESP Rechner des Fahrzeugs kommuniziert.

4. System nach Anspruch 1, **dadurch gekennzeichnet, dass** das Bremssystem, auf das die besagten Wirkglieder einwirken, das hydraulische Hauptbremssystem (310) ist.

5. System nach Anspruch 1, **dadurch gekennzeichnet, dass** das Bremssystem, auf das die besagten Wirkglieder einwirken, das ausgekoppelte Bremssystem (330) ist.

6. Kraftfahrzeug, **dadurch gekennzeichnet, dass** es mit einem automatischen System zum Halten eines Fahrzeugs am Hang nach irgendeinem der Ansprüche 1 bis 5 ausgestattet ist.

7. Kraftfahrzeug nach Anspruch 6, **dadurch gekennzeichnet, dass** es sich um ein zweiradgetriebenes Fahrzeug handelt, das mit einem ESP System ausgestattet ist.

8. Kraftfahrzeug nach Anspruch 6, **dadurch gekennzeichnet, dass** es sich um ein allradgetriebenes Fahrzeug handelt, das mit einem ESP System ausgestattet ist.
